# EUROPÄISCHE PATENTSCHRIFT

(11) **EP 0 362 335 B1**
(45) Veröffentlichungstag und Bekanntmachung des Hinweises auf die Patenterteilung: **02.02.1994**
(21) Anmeldenummer: 89903472.2
(22) Anmeldetag: 06.03.1989
(51) Int. Cl.: H04N 5/93

(54) **VIDEORECORDER MIT EINEM SCHNELLEN VOR- ODER RÜCKLAUF**
VIDEO RECORDER WITH FAST FOWARD AND REVERSE
MAGNETOSCOPE A MARCHE AVANT ET ARRIERE RAPIDE

(30) Priorität: 09.03.1988 DE 3807630
(43) Veröffentlichungstag der Anmeldung: 11.04.1990
(73) Patentinhaber: Nokia (Deutschland) GmbH, 75175 Pforzheim (DE)
(72) Erfinder: APITZ, Siegfried, D-7530 Pforzheim (DE)
(86) Internationale Anmeldenummer: EP8900227
(87) Internationale Veröffentlichungsnummer: WO8908965

(56) Entgegenhaltungen:
- EP-A- 0 209 796
- DE-A- 3 635 255
- GB-A- 2 160 066
- GB-A- 2 192 766

## Beschreibung

Die Erfindung betrifft einen Videorecorder nach dem Oberbegriff des Anspruches 1.

Bei bekannten Videorecordern, wie sie beispielsweise aus dem Buch von H.Bahr "Alles über Video", Philips Fachbuch 1980 der Philips GmbH Hamburg, insbesondere den Seiten 50 bis 55 bekannt sind, werden die Videobilder halbbildweise in Schrägspuren auf ein Videoband aufgezeichnet. Jede Schrägspur umfaßt die aneinandergefügten Bildzeilen eines Halbbildes. Um eine große Bandlaufzeit zu erreichen, sind die Schrägspuren ohne Zwischenräume nebeneinander angeordnet. Das Videoband ist mit einer halben Windung spiralförmig um ein Kopfrad des Videorecorders gelegt, das sich mit konstanter Geschwindigkeit dreht und das zwei Aufnahme- und Wiedergabeköpfe zur Aufzeichnung oder Abtastung der Videobilder enthält. Jeweils abwechselnd ist ein Videokopf zur Aufzeichnung eines vollen Halbbildes vorgesehen.

Die beiden Videoköpfe weisen unterschiedliche Spaltneigungswinkel zueinander auf. Dadurch kann ein Videokopf als Wiedergabekopf nur eine Information aus der Schrägspur abtasten, die von einem Videokopf mit dem gleichen Spaltneigungswinkel auf das Band aufgezeichnet wurde. Durch diese Zuordnung wird beim Abtasten einer Schrägspur ein übersprechen von der Nachbarspur auf ein nichtstörendes Maß reduziert.

Zur Wiedergabe der auf das Videoband aufgezeichneten Videobilder muß die Wiedergabeanordnung die gleichen Systemeigenschaften aufweisen, wie die für die Aufzeichnung der Videobilder auf das Videoband benutzte Aufzeichnungsanordnung. Außerdem muß das Videoband mit der gleichen Laufgeschwindigkeit an den Videoköpfen vorbeigeführt werden, wie bei der Aufzeichnung der Videobilder auf das Videoband, damit die Videoköpfe beim Abtasten auf der ihnen zugeordneten Schrägspur bleiben.

Wird jedoch an dem Videorecorder ein schneller Vor- oder Rücklauf des in den Videorecorder eingelegten Videobandes eingestellt, um beispielsweise in einem schnellen Suchlauf bestimmte Videobilder in kurzer Zeit aufzusuchen, kreuzt der gerade abtastende Videokopf infolge der wesentlich höheren Laufgeschwindigkeit des Videobandes mehrere nebeneinanderliegende Aufzeichnungsspuren des Bandes. Dabei kreuzt er abwechselnd Aufzeichnungsspuren, die seinem Spaltneigungswinkel zugeordnet und solche, die seinem Spaltneigungswinkel nicht zugeordnet sind. An den Stellen der dem Videokopf nicht zugeordneten Videospuren entstehen auf dem die Videobilder darstellenden Bildschirm eines Videogerätes nur mit Rauschsignalen belegte Bildzeilen, die sich auf dem Bildschirm als Störstreifen darstellen.

Zur Vermeidung derartiger Störstreifen bei einem schnellen Suchlauf ist es aus der DE-Fachzeitschrift "Funkschau", 1984, Heft 16, Seiten 37 bis 40 bekannt, die Videoköpfe im Kopfrad eines Videorecorders senkrecht auslenkbar anzuordnen und die Auslenkung dieser Videoköpfe während des schnellen Suchlaufes so zu steuern, daß die Videoköpfe während einer halben Umdrehung des Kopfrades dem Verlauf der abzutastenden Videospur folgen, so daß die abzutastende Spur trotz der wesentlich erhöhten Bandlaufgeschwindigkeit in voller Länge abgetastet wird. Dadurch entstehen keine Überkreuzungen benachbarter, dem abtastenden Videokopf nicht zugeordneter Spuren und somit auch keine Störstreifen auf dem Bildschirm zur Wiedergabe der abgetasteten Videobilder. Derart auslenkbare Videoköpfe erfordern jedoch einen erheblichen zusätzlichen mechanischen Aufwand und zusätzliche Justiermaßnahmen. Außerdem sind für die Auslenkung verhältnismäßig hohe Auslenkspannungen erforderlich.

In der nicht vorveröffentlichten deutschen Patentanmeldung DE-A-3726521 der Anmelderin wird zur Vermeidung von Störstreifen beim schnellen Suchlauf vorgeschlagen, parallel zu einem digitalen Wiedergabeübertragungsweg zur Übertragung von Videosignalen einen zweiten Übertragungsweg vorzusehen, in dem ein Halbbildspeicher angeordnet ist. Ein Störstreifendetektor schaltet den Ausgang des Videorecorders, der normalerweise mit dem direkten Übertragungsweg verbunden ist, während des Erkennens eines Störstreifens an den Übertragungsweg um, der den Halbbildspeicher enthält. Beim Erkennen eines Störstreifens Sperrt der Störstreifendetektor die normale Videobildübertragung und überträgt stattdessen die entsprechenden, im Halbbildspeicher gespeicherten Zeilen des zuletzt eingespeicherten Halbbildes an den Videoausgang des Videogerätes. Auf diese Weise werden zwar die Störstreifen der Bildwiedergabe beseitigt. Bei der Wiedergabe schnell bewegter Szenen entstehen jedoch wegen des Spurwechsels in der Senkrechte stufig versetzte Bildabschnitte, die ebenfalls als störend empfunden werden können.

Der Erfindung liegt die Aufgabe zugurunde, einen Videorecorder nach dem Oberbegriff des Anspruches 1 derart auszugestalten, daß die in einem Suchlauf wiedergegebenen Videobilder möglichst störungsfrei sind. Diese Aufgabe wird nach der Erfindung durch die im kennzeichnenden Teil des Anspruches 1 angegebenen Merkmale gelöst.

Bei einem Videorecorder nach der Erfindung wird die Wiedergabe eines störungsfreien Bildes während eines Suchlaufes des Gerätes nahezu ohne zusätzliche mechanische Mittel erreicht. Mit einem besonderen elektronischen Programmablauf, der beispielsweise in einem ohnehin bereits im Videorecorder vorhandenen Mikroprozessor enthalten ist, wird eine oszillierende Transportbewegung des Videobandes erzeugt, deren mittlere Bandgeschwindigkeit die Suchlaufgeschwindigkeit des Videorecorders ist, vgl. EP-A-0 209 796. Diese oszillierende Transportbewegung des Videobandes kann beispielsweise infolge der mechanischen Trägheit des Bandtransportsystemes durch die alternierende Vorgabe zweier unterschiedlicher Transportgeschwindigkeiten erzeugt werden. Werden Video-Wiedergabeköpfe verwendet, deren Spurhöhe größer ist als die Spurbreite der Videospuren des Bandes, kann die langsamere Bandgeschwindigkeit, die zur Abtastung einer vollständigen, ein Halboild enthaltenden Videospur vorgesehen ist, um das Zwei- bis Dreifache über der Aufnahmegeschwindigkeit liegen. Ein Hüllkurvertdetektor, der aus den Höckern der Hüllkurve des vom Kopfverstärker der Video-Wiedergabeköpfe erzeugten FM-modulierten Videosignales eine Schwingungsweite eines positiven Höckers vorauserkennt, die die der Abtastung der vollständigen Halbbild-Videospur entsprechende Einschaltzeit des zugehörigen Video-Wiedergabekopfes überspannt, erlaubt eine verhältnismäßig kurze Periode der langsamen Bandgeschwindigkeit. Dadurch kann trotz der mechanischen Trägheit des Bandtransportsystemes eine relativ hohe Bildwechselfrequenz während des Suchlaufes erreicht werden.

Die Erfindung wird nachfolgend anhand eines vorteilhaften Ausführungsbeispieles näher dargestellt. In den zugehörigen Zeichnungen zeigen:
- Fig. 1: ein Blockschaltbild mit den für eine störungsfreie Bildwiedergabe eines Suchlaufes erforderlichen Schaltungs- und Funktionsblöcken eines Videorecorders,
- Fig. 2a: schematisch nebeneinandergelegte Bandabschnitte eines Videobandes mit dem Abtastweg der Videoköpfe über die Videoschrägspuren während einer Schwingung der oszillierenden Bandtransportbewegung,
- Fig. 2b: die Einschaltdauer der beiden Videoköpfe als linearer Zeitmaßstab für die Figuren 2a bis 2d,
- Fig. 2c: den Verlauf des Hüllkurvensignals des beim Abtasten der in Fig. 2a dargestellten Spuren am Ausgang des Kopfverstärkers auftretenden frequenzmodulierten Videosignals,
- Fig. 2d: den zeitlichen Verlauf der der Bandservoschaltung zugeführten beiden Referenzgeschwindigkeiten für den in Fig. 2a schematisch dargestellten oszillierenden Bandlauf.

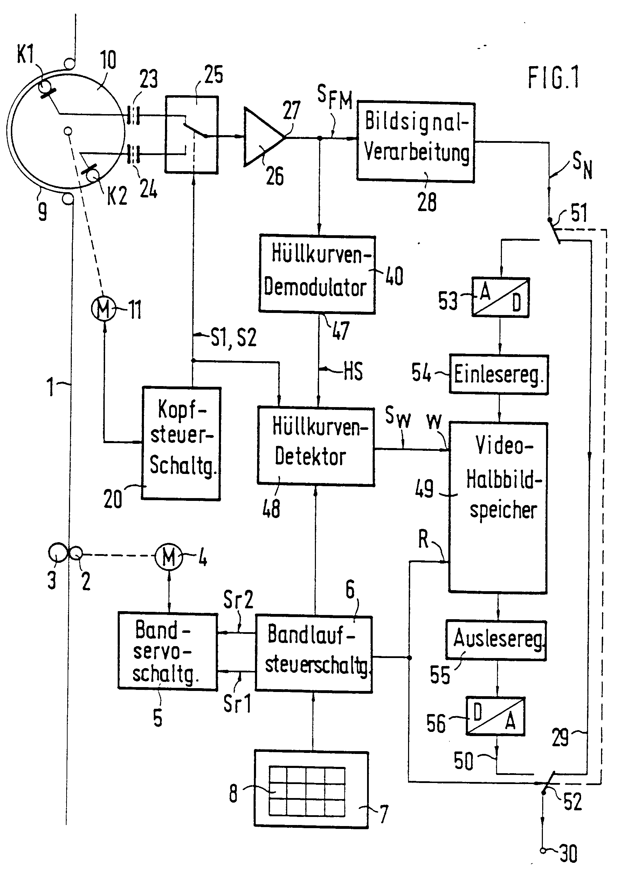

Fig. 1 stellt ein Blockschaltbild dar, das die für eine störungsfreie Bildwiedergabe eines Suchlaufes erforderlichen Schaltungs- und Antriebsblöcke eines Videorecorders enthält. Dieser Suchlauf ist mit einem schnellen Vor- oder Rücklauf eines Videobandes 1 verbunden, das in den Videorecorder eingelegt ist. Das Videoband 1 wird von einer Andruckrolle 3 gegen eine Capstanwelle 2 gepreßt, die von einem Motor 4 angetrieben ist und das Videoband vorwärts oder rückwärts transportiert. Der Motor 4 und damit die Bandgeschwindigkeit des Videobandes 1 werden von einer Bandservoschaltung 5 geregelt, der von einer Bandlaufsteuerschaltung 6 die erforderlichen Einstellsignale zugeführt werden. Die Bandlaufsteuerschaltung 6 steht mit einer Bedienungseinrichtung 7 in Verbindung, an deren Bedienungselementen 8 ein Benutzer des Videorecorders die gewünschte Betriebseinstellung des Videorecorders vornimmt.

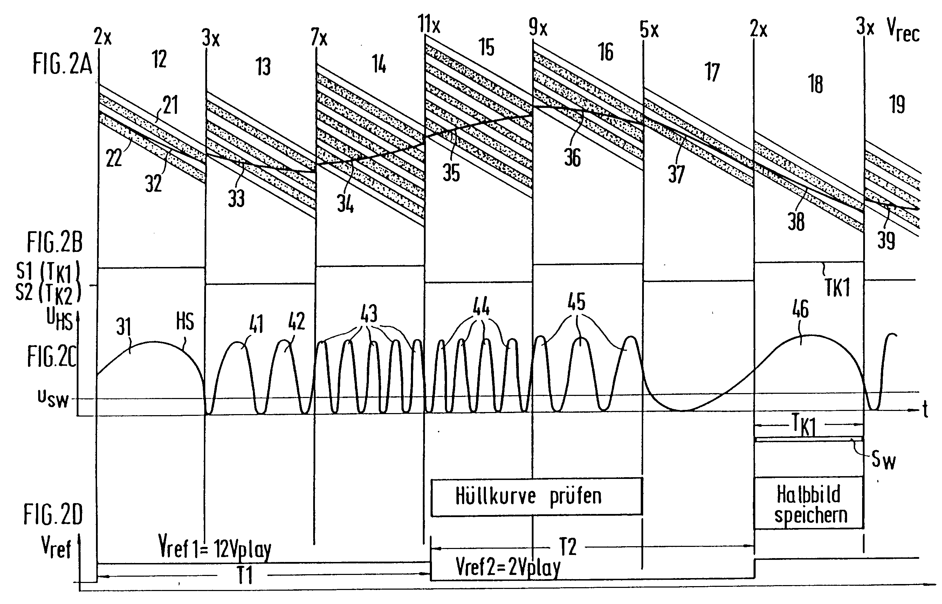

Das Videoband 1 ist mit einer halben Umschlingung 9 spiralförmig um ein Kopfrad 10 des Videorecorders geführt. Das Kopfrad 10 enthält zwei Videoköpfe K1 und K2, die in Wiedergabebetrieb des Videorecorders als Wiedergabe-Videoköpfe dienen, und wird von einen Kopfmotor 11 angetrieben Die Videoköpfe K1 und K2 sind infolge ihres unterschiedlichen Spaltneigungswinkels unterschiedlichen Videospuren auf dem Videoband 1 zugeordnet. Diese Videospuren sind in abwechselnder Reihenfolge als Schrägspuren auf dem Videoband weitgehend nebeneinanderliegend angeordnet, wie in Fig. 2a schematisch dargestellt ist. In Fig. 2a sind acht hintereinanderliegende Bandabschnitte 12 bis 19 des Videobandes 1 nebeneinander dargestellte. Die nicht schraffierten Videospuren 22 sind im dargestellten Ausführungsbeispiel dem Videokopf K1 und die schraffierten Videospuren 21 dem Videokopf K2 zugeordnet. Jede Videospur hat die Länge eines Halbbildes, d.h. in ihr sind in einer fortlaufenden Reihe die Videosignale der Zeilen eines Halbbildes aufgezeichnet.

Eine Kopfsteuerschaltung 20 regelt den Kopfmotor 11 derart, daß das Kopfrad 10 eine für die normale Wiedergabe bestimmte Drehzahl einhalt und die Videoköpfe K1 und K2 die ihnen zugeordnete Videospuren 21 und 22 abtasten. Die von den Videoköpfen K1 und K2 vom Videoband 1 abgetasteten Videosignale gelangen über rotierende Übertrager 23 und 24 und über einen Kopfumschalter 25 in einen Kopfverstärker 26, an dessen Ausgang 27 ein frequenzmoduliertes Videosignal S_{FM} auftritt. Dieses frequenzmodulierte Videosignal S_{FM} wird in einer Bildsignelverarbeitungsanordnung 28 in ein normgerechtes Videosignal S_{N} umgewandelt, das über einen ersten Wiedergabeübertragungsweg 29 einem Videoausgang 30 des Videorecorders zur Weiterleitung an ein nicht näher dargestelltes Bildschirmgerät zugeführt wird.

Wird über die Bedienungselemente 8 der Bedienungseinrichtung 7 der Videorecorder in einen schnellen Suchlauf eingestellt, wird dadurch die Bandlaufsteuerschaltung 6 in den Betriebszustand eines schnellen Vor- oder Rücklaufes eingestellt. In diesem Betriebszustand ist in der Bandlaufsteuerschaltung 6 ein Programmablauf eingeschaltet, der in fortlaufender Folge und abwechselnd nacheinander in einem ersten Zeitabschnitt T1 ein Referenzsignal Sᵣ₁ für eine hohe Bandgeschwindigkeit, beispielsweise einer zwölffachen Aufnahmegeschwindigkeit, an die Bandservoschaltung 5 gibt und in einem daran anschließenden kleineren Zeitabschnitt T2 ein zweites Referenzsignal Sᵣ₂ für eine kleine Bandgeschwindigkeit, beispielsweise der zweifachen Aufnahmegeschwindigkeit, an die Bandservoschaltung 5 überträgt. Dieser Programmablauf ist in Fig. 2d schematisch dargestellt. Dadurch wird die Bandgeschwindigkeit in den in Fig. 2a dargestellten Bandabschnitten 12, 13 und 14 beschleunigt von einer zweifachen bis zu einer elffachen Aufzeichnungsgeschwindigkeit und in den Bandabschnitten 15, 16 und 17 wieder bis zu einer zweifachen Aufzeichnungsgeschwindigkeit v_{rec} verzögert. In den einzelnen Bandabschnitten 12 bis 19 ist der Abtastweg 32 bis 39 des jeweils eingeschalteten Videokopfes K1 oder K2 über die Videospuren 21 und 22 der Bandabschnitte 12 bis 19 Schematisch dargestellt. Fig. 2b stellt die Einschaltsignale S1 und S2 für die beiden Videoköpfe K1 und K2 Schematisch dar. Diese von der Kopfsteuerschaltung 20 erzeugten Einschaltsignale schalten den Kopfumschalter 25, der abwechselnd den einen Videokopf K1 und danach den anderen Videokopf K2 an den Eingang des Kopfverstärkers 26 anschließt. Im ersten in Fig. 2a dargestellten Bandabschnitt 12 liegt der Abtastweg 32 des eingeschalteten Videokopfes K1 im wesentlichen über die gesamte Länge einer Videospur innerhalb des Abtastbereiches einer diesem Videokopf zugeordneten Videospur 21. Das im Bandabschnitt 12 von diesem Videokopf K1 abgetastete und von Kopfverstärker 26 Verstärkte, frequenzmodulierte Videosignal S_{FM} weist entsprechend dem Verlauf des Abtastweges 32 eine Hüllkurve auf, deren Verlauf 31 für den Bandabschnitt 12 in Fig. 2c dargestellt ist und die von einem an den Ausgang 27 des Kopfverstärkers 26 angeschlossenen Hüllkurvendemodulator 40 als Hüllkurvensignal HS erzeugt wird.

Der Abtastweg des danach eingeschalteten zweiten Videokopfes K2 beginnt im nächsten Bandabschnitt 13 mit dem Versatz einer Videospur in einer dem Videokopf K2 nicht zugeordneten Videospur 21 und überquert danach zwei ihm zugeordnete und zwei ihm nicht zugeordnete Videospuren. Dadurch entstehen in der Hüllkurve des frequenzmodulierten Ausgangssignales des Kopfverstärkers 26 zwei Höcker 41 und 42, die das Vorhandensein eines für die Bildwiedergabe ausreichenden Videosignales anzeigen Der Abtastweg 34 des zur Abtastung des Bandabschnittes 14 eingeschalteten ersten Videokopfes K1 kreuzt fünf diesem Videokopf K1 zugeordnete Videospuren 21 und erzeugt damit am Ausgang des Kopfverstärkers 26 fünf Höcker 43 der Hüllkurve 31 des in diesen Bandabschnitt abgetasteten frequenazmodulierten Videosignales, die in Fig. 2c für den Bandabschnitt 14 dargestellt sind. Im darauf folgendem Bandabschnitt 15 kreuzt der in diesem Bandabschnitt angeschlossene Videokopf K2 vier ihm zugeordnete Videospuren 22, so daß das der Hüllkurve des frequenzmodulierten Videosignales am Ausgang 27 des Kopfverstärkers 26 entsprechende Hüllkurvensignal HS Vier Höcker 44 aufweist. Im nächsten Bandabschnitt 16 kreuzt der dort eingeschaltete Videokopf K1 drei ihm zugeordnete Videospuren 21, was drei Höcker 45 des Hüllkurvensignals im im Bandabschnitt 16 ergibt. Der Abtastweg 37 des im nächsten Bandabschnitt 17 eingeschalteten Videokopfes K2 liegt im wesentlichen nur im Bereich einer diesem Kopf nicht zugeordneten Videospur 21, so daß dieser Videokopf K2 nur am Anfang und am Ende seines Abtastweges 37 für eine Übertragung ausreichende frequenzmodulierte Videosignale der bei den Nachbarspuren erzeugt. Der Abtastweg 38 des im Bandabschnitt 18 eingeschalteten Videokopfes K1 liegt dagegen in der gesamten Länge des Abtastweges 38 innerhalb des Bereiches einer ihm zugeordneten Videospur 21. Der Videokopf K1 erzeugt dadurch im Bandabschnitt 18 am Ausgang 27 des Kopfverstärkers 26 ein für eine Übertragung ausreichendes frequenzmoduliertes Videosignal über die volle Länge der in diesem Bandabschnitt 18 abgetasteten Videospur. Der zugehörige Abschnitt des Hüllkurvensignals HS dieses Videosignales bildet somit einen einzigen Höcker 46, der die gesamte Einschaltzeit T_{K1} des Videokopfes K1 im Bandabschnitt 18 überspannt. Die Abtastung in den Bandabschnitten 18 und 19 entspricht der Abtastung in den Bandabschnitten 12 und 13.

Oberhalb einer bestimmten Schwellenspannung U_{sw} (Fig. 2c) kennzeichnen die Höcker 31 und 41 bis 46 des Hüllkurvensignals HS am Ausgang 47 des Hüllkurvendemodulators 40 jeweils den Zeitbereich, in dem der Kopfverstärker 26 an seinem Ausgang 27 ein frequenzmoduliertes Videosignal S_{FM} mit einer für die Bildsignalverarbeitung ausreichenden Amplitude liefert.

Dem Hüllkurvendemodulator 40, der an seinem Ausgang 47 das in Fig. 2c dargestellte Hüllkurvensignal HS erzeugt, ist ein Hüllkurvendetektor 48 nachgeschaltet, der im eingeschalteten Zustand das Hüllkurvensignal HS mit den Einschaltsignalen S1 und S2 der beiden Videoköpfe K1 und K2 vergleicht und der aus der Form und Anordnung der Höcker 41 bis 45 des Hüllkurvensignales HS einen Höcker 46 vorauserkennt, dessen Schwingungsweite die Einschaltzeit TK1 des zugehörigen Videokopfes K1 vollständig überspannt. Während des Bestehens dieses Höckers 46 des Hüllkurvensignals HS überträgt der Hüllkurvendetektor 48 das Einschaltsignal S1 für den Videokopf K1, der während dieses Höckers 46 an den Kopfverstärker 26 angeschaltet ist, zusätzlich als Einlesesignal Sw (Fig. 2c) an den Schreibeingang W eines Halbbildspeichers 49, der in einem zweiten Wiedergabe-Übertragungsweg 50 für die Bildwiedergabe während eines schnellen Suchlaufes angeordnet ist. Dieser Wiedergabeübertragungsweg 50 ist während des Suchlaufbetriebszustandes der Bandlaufsteuerschaltung 6 über Umschalter 51 und 52 anstelle des normalen Wiedergabe-Übertragungsweges 29 eingeschaltet und enthält einen Analog-Digital-Wandler 53, ein Einleseregister 54 und ein Ausleseregister 55 des Halbbildspeichers 49 und einen Digital-Analog-Wandler 56. Der Halbbildspeicher 49 wird während des gesamten Suchlaufbetriebes durch einen Auslesebefehl R ununterbrochen ausgelesen, unabhängig von einem eventuell über das Einleseregister 54 vollzogenen Einlesevorgang in den Halbbildspeicher 49.

In dem in den Figuren 2a bis 2d dargestellten Ausführungsbeispiel werden von der einzelnen Videospur in den Bandabschnitten 12 und 18 abgetasteten Halbbilder über das Einleseregister 54 in den Halbbildspeicher 49 eingelesen und dabei das zuvor in Halbbildspeicher enthaltene Halbbild überschrieben. Dazwischen liegen fünf Abtastungen durch die Videoköpfe K1 und K2, bei denen 35 Halbbilder nicht verarbeitet werden. Damit wird in dem dargestellten Ausführungsbeispiel bei einer gegenüber der Aufzeichnungsgeschwindigkeit 6-fachen Suchlaufgeschwindigkeit jedes 36. Halbbild in den Halbbildspeicher 49 eingelesen und 6-mal aus diesem zur Bildwiedergabe ausgelesen.

## Patentansprüche

1. Videorecorder
- mit einer Bandlaufsteuranordnung zur Einstellung eines schnellen Vorwärts - oder Rückwärtssuchlaufes eines Videobandes,
- mit einem Halbbildspeicher im Wiedergabe-Übertragungsweg der vom Videoband abgetasteten Videobilder,
- wobei die Bandlaufsteueranordnung (6) einen Programmablauf enthält, der im schnellen Suchlaufbetrieb die Bandlaufgeschwindigkeit stets wiederholend auf eine untere Bandlaufgeschwindigkeit absenkt, die einem Video-Wiedergabekopf (K1) das Abtasten einer vollständigen Halbbild-Videospur (21) des Videobandes (1) ermöglicht,
- und wobei der Videoausgang (30) des Videorecorders während des schnellen Suchlaufes dauernd an den den Halbbildspeiher (49) enthaltenden Wiedergabe-Übertragungsweg (50) angeschlosssen ist,
- und mit einem Hüllkurvendetektor (48), der aus den Schwingungen (41 bis 46) des Hüllkurvensignals (HS) des vom Kopfverstärker (26) der Video-Wiedergabeköpfe (K1, K2) erzeugten frequenzmodulierten Videosignals (S_{FM}) eine Schwingungsweite eines positiven Höckers (46) vorauserkennt, die die der Abtastung der vollständigen Halbbild-Videospur entsprechende Einschaltzeit (T_{K1}) des zugehörigen Video-Wiedergabekopfes (K1) überspannt, und während dieser Einschaltzeit ein Ausgangssignal (S_{W}) erzeugt, währeud dessen der Halbbildspeicher zum Einlesen des zugehörigen Videosignals (S_{N}) wirksam geschaltet wird.

2. Videorecorder nach Anspruch 1, gekennzeichnet durch einen Programmablauf der Bandlaufsteuerschaltung (6) der den schnellen Vor- oder Rücklauf des Videobandes (1) sich stets wiederholend nach bestimmten Zeitabständen (T1) unterbricht und während der Unterbrechungszeit (T2) ein Referenzgeschwindigkeitssignal (Sr2) für eine untere Bandlaufgeschwindigkeit einstellt, die einem Video-Wiedergabekopf (K1) das Abtasten einer vollständigen Halbbild-Videospur (21) des Videobandes ermöglicht.

3. Videorecorder nach Anspruch 2, dadurch gekennzeichnet, daß der Hüllkurvendetektor (48) nur innerhalb der Unterbrechungszeit (T2) während des schnellen Vor- oder Rücklaufes eingeschaltet ist.

## Claims

1. Videorecorder
- with a tape drive control arrangement for setting a fast forward or reverse search mode of a videotape,
- with a frame memory in the playback transmission path of the video images scanned from the videotape,
- such that the tape drive control arrangement (6) contains a program sequence that in fast search mode repeatedly decreases the tape speed to a lower tape speed that allows a video playback head (K1) to scan a complete frame video track (21) of the videotape (1),
- and such that the video output (30) of the videorecorder during fast search mode is continuously connected to the playback transmission path (50) containing the frame memory (49),
- and with an envelope detector (48) that, from the oscillations (41 to 46) of the envelope signal (HS) of the frequency-modulated video signal (S_{FM}) generated by the head amplifier (26) of the video playback heads (K1, K2), predetects an oscillation width of a positive hump (46) that bridges the activation time (T_{K1}), corresponding to scanning of the complete frame video track, of the associated video playback head (K1) and generates during that activation time an output signal (S_{W}) during which the frame memory is made effective in order to read in the associated video signal (S_{N}).

2. Videorecorder according to Claim 1, characterized by a program sequence of the tape drive control circuit (6) that repeatedly interrupts the fast forward or reverse travel of the videotape (1) at specific time intervals (T1), and during the interruption time (T2) applies a reference speed signal (Sr2) for a lower tape speed that allows a video playback head (K1) to scan a complete frame video track (21) of the videotape.

3. Videorecorder according to Claim 2, characterized in that the envelope detector (48) is activated only within the interruption time (T2) during fast forward or reverse travel.

## Revendications

1. Enregistreur vidéo
- avec un dispositif de commande du déroulement de la bande pour le réglage d'une marche de détection avant ou arrière rapide d'une bande vidéo,
- avec une mémoire de trame dans la voie de transfert de reproduction des images vidéo balayées par la bande vidéo,
- le dispositif de commande du déroulement de la bande (6) comprenant un programme qui, en fonctionnement de détection rapide, abaisse de façon itérative la vitesse de la bande à une vitesse de bande inférieure, permettant à une tête de lecture vidéo (K1) le balayage d'une piste vidéo de trame (21) de la bande vidéo (1),
- et la sortie vidéo (30) de l'enregistreur vidéo étant en continu branchée sur la voie de transfert de reproduction (50) contenant la mémoire de trame (49),
- et avec un détecteur d'enveloppantes (48) reconnaissant d'avance une amplitude d'oscillation d'un point de pic positif (46) à partir des oscillations (41 à 46) du signal des enveloppantes (HS) du signal vidéo à modulation de fréquence (S_{FM}) généré par l'amplificateur (26) des têtes de lecture vidéo (K1, K2), amplitude qui recouvre la durée de fonctionnement (T_{K1}), correspondant au balayage de la piste vidéo de trame complète, de la tête de lecture vidéo (K1), et qui génère pendant cette durée de fonctionnement un signal de sortie (S_{W}), pendant que la mémoire de trame est activée pour la mise en mémoire du signal vidéo (S_{N}) associé.

2. Enregistreur vidéo selon la revendication 1, caractérisé en ce que un programme du circuit de commande du déroulement de la bande (6) interrompt de façon itérative la marche avant ou arrière rapide de la bande vidéo (1) après certains intervalles de temps (T1) et règle, pendant la période d'interruption (T2) un signal de référence de vitesse (Sr2) pour une vitesse de déroulement de bande inférieure permettant à une tête de lecture vidéo (K1) le balayage d'une piste vidéo de trame (21) de la bande vidéo.

3. Enregistreur vidéo selon la revendication 2, caractérisé en ce que le détecteur d'enveloppantes (48) n'est en service que durant la période d'interruption (T2) pendant la marche avant ou arrière rapide.
